# EUROPEAN PATENT APPLICATION

(11) **EP 4 434 610 A1**
(43) Date of publication of application: **25.09.2024**
(21) Application number: 22892934.5
(22) Date of filing: 15.11.2022
(51) Int. Cl.: B01D 53/26, B60T 17/00, F04B 37/20, F04B 49/03, F04B 49/06

(54) **AIR SUPPLY SYSTEM, CONTROL METHOD FOR AIR SUPPLY SYSTEM, AND CONTROL PROGRAM FOR AIR SUPPLY SYSTEM**

(30) Priority: 15.11.2021 JP 2021185964
(71) Applicant: Nabtesco Automotive Corporation, Tokyo 102-0093 (JP)
(72) Inventor: SUGIO, Takuya, Tokyo 102-0093 (JP); YOKEDA, Kazuya, Tokyo 102-0093 (JP); KATAYAMA, Yusaku, Tokyo 102-0093 (JP)
(74) Representative: Grünecker Patent- und Rechtsanwälte PartG mbB
(86) International application number: PCT/JP2022/042360
(87) International publication number: WO 2023/085436

(57) **Abstract**

An air supply system, a method of controlling an air supply system, and a control program for an air supply system are provided that limit increase in the humidity of compressed dried air. An air supply system 10 includes an air drying circuit 11 that is arranged between a compressor 4 and an air tank 30 and includes a filter 17 including a desiccant that captures water, and an ECU 80 that controls the air drying circuit 11. When the amount of compressed dried air that has passed through the filter 17 is greater than a specified passed-through air amount due to a continuous supplying operation and the humidity of the compressed dried air is greater than a prescribed value, the ECU 80 executes a forced regeneration operation of forcibly causing the compressed dried air stored in the air tank 30 to pass through the filter 17 in an inverse direction, thereby draining, from a drain port 27, fluid that has passed through the filter 17.

## Description

### TECHNICAL FIELD

The present disclosure relates to an air supply system, a control method for an air supply system, and a control program for an air supply system.

### BACKGROUND ART

Vehicles such as trucks, buses, and construction machines use compressed air delivered from a compressor to control pneumatic systems such as a brake system and a suspension system. The compressed air contains liquid impurities such as water, which is contained in the atmosphere, and oil for lubricating the interior of the compressor. When entering inside a pneumatic system, compressed air containing a large amount of water and oil may cause rust and swelling of rubber members, which can result in an operational defect. For this reason, a compressed-air drying device that removes impurities such as water and oil from the compressed air is arranged downstream relative to the compressor.

The compressed-air drying device includes a desiccant and various types of valves. The compressed-air drying device performs a loading operation (dehumidifying operation) that removes water and the like from compressed air. Compressed dried air generated by the dehumidifying operation is stored in an air tank. The purification function of the compressed-air drying device is reduced in accordance with a passed-through air amount of the compressed dried air. For this reason, the compressed-air drying device performs the unloading operation (regeneration operation), in which the compressed-air drying device removes oil and water adsorbed by the desiccant from the desiccant, releases the removed oil and water as collected liquid through a drain valve (refer to, for example, Patent Literature 1).

### CITATION LIST

### Patent Literature

Patent Literature 1 Japanese Laid-Open Patent Publication No. 2015-229127

### SUMMARY OF INVENTION

### Technical Problem

In the compressed-air drying device described above, if the use of compressed dried air stored in the air tank is continuous, the supplying operation also continues without any interruption. Then, the regenerating operation is not performed. As a result, the dehumidification performance of the desiccant decreases. Thus, when the supplying operation is continuously performed, the increase in the humidity of the compressed dried air needs to be limited.

### Solution to Problem

To achieve the foregoing objectives, an air supply system includes an air drying circuit and a controller. The air drying circuit is arranged between a compressor configured to use power of an engine as a drive source to deliver compressed air and an air tank configured to store compressed dried air. The air drying circuit includes a filter including a desiccant that captures water. The controller is configured to control the air drying circuit. The controller is configured to execute a supplying operation of causing the compressed air delivered by the compressor to pass through the filter in a first direction to produce compressed dried air, and storing this compressed dried air in the air tank, a normal regeneration operation of causing the compressed dried air stored in the air tank to pass through the filter in a second direction that is opposite to the first direction, thereby draining the trapped water through a discharge port, and a forced regeneration operation of causing, when an amount of the compressed air that has passed through the filter in the supplying operation is greater than a first amount and a humidity of the compressed dried air that is supplied is greater than a prescribed value, the compressed dried air stored in the air tank to pass through the filter in the second direction, thereby draining the trapped water through the discharge port.

The above-described air supply system executes the forced regeneration operation when the amount of compressed air that has passed through the filter is greater than the specified passed-through air amount and the humidity of the compressed dried air that is supplied is greater than the prescribed value. Thus, even if the regeneration operation is not performed and the supplying operation is continuously performed, the compressed dried air stored in the air tank is caused to pass through the filter in the inverse direction, so that the filter is regenerated. This limits an increase in the humidity of the compressed dried air that is supplied.

In the above-described air supply system, the controller may be configured to output to the engine an instruction for increasing a rotation speed of the engine when an amount of the compressed dried air stored in the air tank is less than a second amount.

In the above-described air supply system, the controller may be configured to perform a purging operation to discharge the compressed dried air in the air drying circuit from the discharge port after a specified time elapses from when the engine stops.

The above-described air supply system may further include a branch passage connected to the air drying circuit, a drain valve that connects the branch passage to the discharge port, and a regeneration control valve capable of switching a direction in which the compressed dried air flows between the first direction and the second direction. The first direction may be a direction from the filter toward the air tank, and the second direction is a direction from the air tank toward the filter. The controller may be configured to control the drain valve and the regeneration control valve.

To achieve the fore-going objectives, a control method for an air supply system is provided. The air supply system includes an air drying circuit and a controller. The air drying circuit is arranged between a compressor configured to use power of an engine as a drive source to deliver compressed air and an air tank configured to store compressed dried air. The air drying circuit includes a filter including a desiccant that captures water. The controller is configured to control the air drying circuit. The method includes a supplying step that executes a supplying operation of causing the compressed air delivered by the compressor to pass through the filter in a first direction to produce compressed dried air, and storing this compressed dried air in the air tank, a regenerating step that executes a normal regeneration operation of causing the compressed dried air stored in the air tank to pass through the filter in a second direction that is opposite to the first direction, thereby draining the trapped water through a discharge port, and a forced regeneration step that executes a forced regeneration operation of causing the compressed dried air stored in the air tank to pass through the filter in the second direction, thereby draining the trapped water through the discharge port when an amount of the compressed air that has passed through the filter in the supplying operation is greater than a first amount and a humidity of the compressed dried air that is supplied is greater than a prescribed value.

In the above-described method, the forced regeneration operation is executed when the amount of compressed air that has passed through the filter is greater than the specified passed-through air amount and the humidity of the compressed dried air that is supplied is greater than the prescribed value. Thus, even if the regeneration operation is not performed and the supplying operation is continuously performed, the compressed dried air stored in the air tank is caused to pass through the filter in the inverse direction, so that the filter is regenerated. This limits an increase in the humidity of the compressed dried air that is supplied.

To achieve the foregoing objectives, a control program for an air supply system is provided. The air supply system includes an air drying circuit and a controller. The air drying circuit is arranged between a compressor configured to use power of an engine as a drive source to deliver compressed air and an air tank configured to store compressed dried air. The air drying circuit includes a filter including a desiccant that captures water. The controller is configured to control the air drying circuit. The controller executes a supplying step that executes a supplying operation of causing the compressed air delivered by the compressor to pass through the filter in a first direction to produce compressed dried air, and storing this compressed dried air in the air tank, a regenerating step that executes a normal regeneration operation of causing the compressed dried air stored in the air tank to pass through the filter in a second direction that is opposite to the first direction, thereby draining the trapped water through a discharge port, and a forced regeneration step that executes a forced regeneration operation of causing the compressed dried air stored in the air tank to pass through the filter in the second direction, thereby draining the trapped water through the discharge port when an amount of the compressed air that has passed through the filter in the supplying operation is greater than a first amount and a humidity of the compressed dried air that is supplied is greater than a prescribed value.

In the above-described program, the forced regeneration operation is executed when the amount of compressed air that has passed through the filter is greater than the specified passed-through air amount and the humidity of the compressed dried air that is supplied is greater than the prescribed value. Thus, even if the regeneration operation is not performed and the supplying operation is continuously performed, the compressed dried air stored in the air tank is caused to pass through the filter in the inverse direction, so that the filter is regenerated. This limits an increase in the humidity of the compressed dried air that is supplied.

### Advantageous Effects of Invention

The present disclosure limits an increase in the humidity of compressed dried air.

### BRIEF DESCRIPTION OF DRAWINGS

Fig. 1 is a block diagram showing the configuration of an air supply system according to an embodiment.
Fig. 2A is a diagram showing a first operation mode and a seventh operation mode of an air drying circuit of the embodiment shown in Fig. 1.
Fig. 2B is a diagram showing a second operation mode of the air drying circuit of the embodiment shown in Fig. 1.
Fig. 2C is a diagram showing a third operation mode and an eighth operation mode of the air drying circuit of the embodiment shown in Fig. 1. Fig. 2D is a diagram showing a fourth operation mode of the air drying circuit of the embodiment shown in Fig. 1.
Fig. 2E is a diagram showing a fifth operation mode of the air drying circuit of the embodiment shown in Fig. 1.
Fig. 2F is a diagram showing a sixth operation mode of the air drying circuit of the embodiment shown in Fig. 1.
Fig. 3 a transition diagram showing transitions of the operation of the air drying circuit of the embodiment shown in Fig. 1.
Fig. 4 is a flowchart showing transitions from the first operation mode of the air drying circuit of the embodiment shown in Fig. 1.
Fig. 5 is a flowchart showing transitions from the second operation mode and the third operation mode of the air drying circuit of the embodiment shown in Fig. 1.
Fig. 6 is a flowchart showing transitions from the fifth operation mode of the air drying circuit of the embodiment shown in Fig. 1.
Fig. 7 is a flowchart showing transitions from a seventh operation mode of the air drying circuit of the embodiment shown in Fig. 1.
Fig. 8 is a flowchart showing transitions from the eighth operation mode of the air drying circuit of the embodiment shown in Fig. 1.
Fig. 9 is a flowchart showing processes executed when forced regeneration is performed for the air drying circuit of the embodiment shown in Fig. 1.
Fig. 10 is a sequence chart showing an idle speed increase performed during a supplying operation of the air drying circuit of the embodiment shown in Fig. 1.
Fig. 11 is a sequence chart showing a key-off purge performed when the air drying circuit of the embodiment shown in Fig. 1 stops the supplying operation.

### DESCRIPTION OF EMBODIMENTS

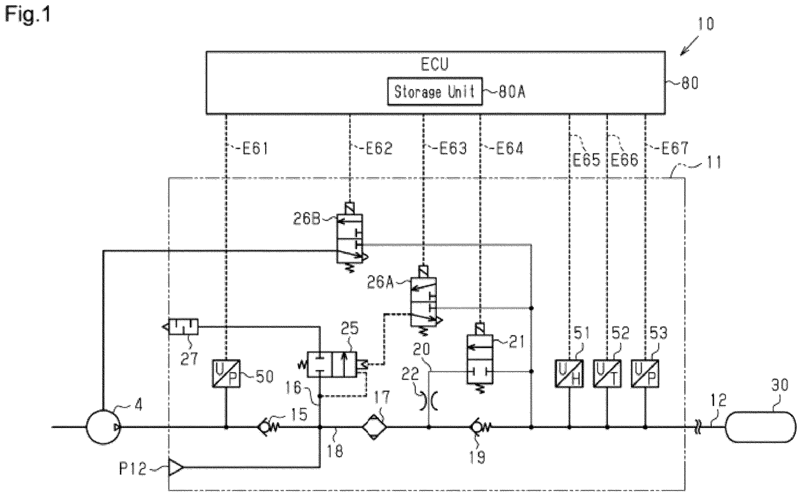

An air supply system according to an embodiment will now be described with reference to Figs. 1 to 8. The air supply system is mounted on a vehicle such as a truck, a bus, or a construction machine. Compressed dried air supplied by the air supply system is used in a pneumatic device such as a brake system mounted on the vehicle.

### Air Supply System 10

An air supply system 10 will be described with reference to Fig. 1. The air supply system 10 includes a compressor 4, an air drying circuit 11, and an electronic control unit (ECU) 80 that serves as a controller.

The ECU 80 is connected to the air drying circuit 11 by wires E61 to E67. The ECU 80 may be implemented by one or more processors that execute various processes in accordance with computer programs (software). The processes executed by the ECU 80, that is, the processor, include processes of a control method for an air supply system. The control method for an air supply system includes a supplying step, a regeneration step, and a forced regeneration step, which will be discussed below. The ECU 80 may include one or more dedicated hardware circuits such as an application-specific integrated circuit (ASIC) that executes at least a part of various processes executed by itself. That is, the ECU 80 may be circuitry including: (1) one or more processors that operate according to a computer program (software), (2) one or more dedicated hardware circuits that execute at least part of various types of processes, or (3) a combination thereof. The processor includes a CPU and memory such as a RAM, a ROM, and the like. The memory stores program code or instructions configured to cause the CPU to execute processes. The memory, which is a computer-readable medium, includes any type of media that are accessible by general-purpose computers and dedicated computers. The programs stored in the computer-readable medium include a control program for the air supply system. The control program for an air supply system includes the supplying step, the regeneration step, and the forced regeneration step. The ECU 80 further includes a storage unit 80A that stores results of operations of the air drying circuit 11. The storage unit 80A may be a non-volatile storage unit or a volatile storage unit and may be the same as or different from the storage unit that stores the control program.

The ECU 80 is connected to other ECUs (not shown) mounted in the vehicle, such as an engine ECU and a brake ECU, through a vehicle on-board network such as a controller area network (CAN). The ECU 80 obtains information indicating the state of vehicle from the ECUs. The information indicating the vehicle state includes, for example, the off-state information of the ignition switch, the vehicle speed, and the driving information of the engine.

The state of the compressor 4 is switched, based on command values from the ECU 80, between an operating state (loaded operation), in which air is compressed and delivered, and a non-operating state (idling operation), in which air is not compressed. The compressor 4 is driven by power transmitted from a rotary drive source such as an engine.

The air drying circuit 11 includes, for example, an air dryer. The air drying circuit 11 is connected to the ECU 80 and removes water and the like contained in the compressed air delivered from the compressor 4 during a loaded operation. The air drying circuit 11 delivers dried compressed air (hereafter, referred to as compressed dried air) to a supply circuit 12. The compressed dried air supplied to the supply circuit 12 is stored in an air tank 30. Such an operation is referred to as a supplying operation.

The compressed dried air stored in the air tank 30 is supplied to a pneumatic device such as a brake system mounted on the vehicle. For example, when the brakes are frequently activated, for example, when the vehicle is traveling on a downhill road or in an urban area, a relatively large amount of the compressed dried air stored in the air tank 30 is consumed. In contrast, when the brakes are activated less frequently, a relatively small amount of the compressed dried air stored in the air tank 30 is consumed.

The air drying circuit 11 includes a maintenance port P12. The maintenance port P12 supplies air to the air drying circuit 11 during maintenance.

### Air Drying Circuit 11

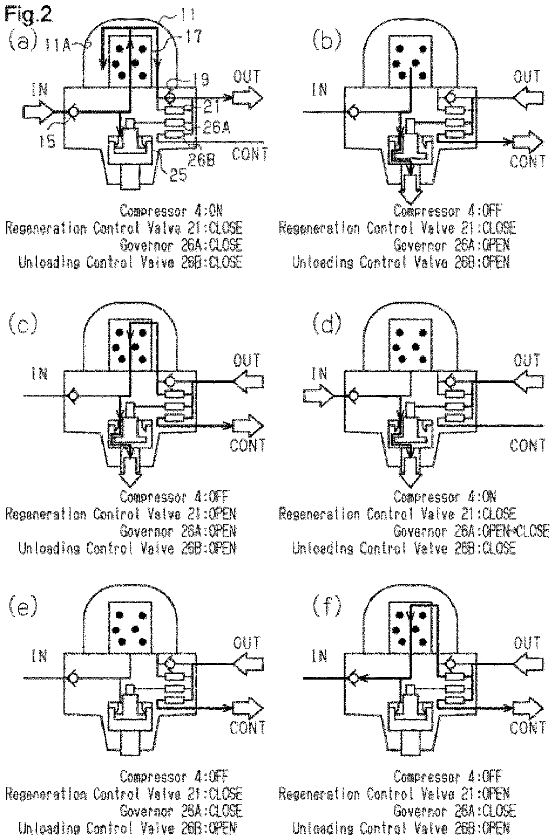

The air drying circuit 11 includes a filter 17, for example, inside a case 11A (refer to Fig. 2A). The filter 17 is arranged in an air supply passage 18, which connects the compressor 4 and the supply circuit 12 to each other. The filter 17 includes a desiccant. The filter 17 may also include an oil trapping portion that traps oil in addition to the desiccant. The oil trapping portion may be anything as long as the oil trapping portion traps oil while allowing air to pass through. For example, the oil trapping portion may be a foam such as urethane foam, a metal material having numerous vent holes, and a glass fiber filter.

The filter 17 causes the compressed air delivered from the compressor 4 to pass through the desiccant, thereby removing water contained in the compressed air to dry the compressed air. That is, the filter 17 generates compressed dried air. In addition, the desiccant or the oil trapping portion traps oil contained in the compressed air to purify the compressed air. The compressed dried air that has passed through the filter 17 is supplied to the supply circuit 12 via a downstream check valve 19, which permits air to flow only to the downstream side of the filter 17. That is, when the filter 17 is disposed on the upstream side, and the supply circuit 12 is disposed on the downstream side, the downstream check valve 19 permits air to flow only from the upstream side to the downstream side. The downstream check valve 19 has a specified valve opening pressure (sealing pressure). Thus, when compressed dried air flows, the pressure on the upstream side is higher than the pressure on the downstream side by the valve opening pressure.

Further, a bypass passage 20, which bypasses the downstream check valve 19, is provided on the downstream side of the filter 17. The bypass passage 20 is provided in parallel to the downstream check valve 19. The bypass passage 20 includes a regeneration control valve 21.

The regeneration control valve 21 is an electromagnetic valve controlled by the ECU 80. The ECU 80 controls energization/de-energization (activation/deactivation) of the regeneration control valve 21 via the wire E64, thereby switching the operation of the regeneration control valve 21. In a de-energized state, the regeneration control valve 21 is closed to block the bypass passage 20. In an energized state, the regeneration control valve 21 is open to open the bypass passage 20. The ECU 80 receives, for example, a value of air pressure in the air tank 30 and operates the regeneration control valve 21 if the value of air pressure exceeds a specified range.

The bypass passage 20 includes an orifice 22 between the regeneration control valve 21 and the filter 17. When the regeneration control valve 21 is energized, the compressed dried air in the supply circuit 12 is delivered to the filter 17 via the bypass passage 20 with the flow rate being regulated by the orifice 22. The compressed dried air delivered to the filter 17 flows backward from the downstream side to the upstream side through the filter 17 to pass through the filter 17. This process regenerates the filter 17 and is referred to as a regeneration operation of a dryer. Since the compressed air delivered to the filter 17 at this time has passed through the filter 17 from the air supply passage 18 and supplied to the supply circuit 12 as dry and clean air, the compressed air removes water and oil trapped in the filter 17 from the filter 17. In the normal control, when the pressure in the air tank 30 reaches an upper limit value (cut-out pressure), the ECU 80 opens the regeneration control valve 21. When the pressure in the air tank 30 drops to a lower limit value (cut-in pressure), the ECU 80 closes the regeneration control valve 21, which has been open.

A branch passage 16 branches off a section between the compressor 4 and the filter 17. A drain valve 25 is disposed on the branch passage 16, and a drain port 27 is connected to the end of the branch passage 16.

Collected liquid, which a fluid containing water and oil removed from the filter 17, is delivered to the drain valve 25 together with compressed air. The drain valve 25 is a pneumatic valve driven by air pressure and is disposed in a section of the branch passage 16 between the filter 17 and the drain port 27. The drain valve 25 is a two-port two-position valve, which changes the position between a closed position and an open position. The drain valve 25 delivers collected liquid to the drain port 27 when in the open position. The collected liquid discharged from the drain port 27 may be recovered by an oil separator (not shown). The collected liquid corresponds to the fluid that has passed through the filter 17 in the inverse direction.

The drain valve 25 is controlled by a governor 26A. The governor 26A is an electromagnetic valve controlled by the ECU 80. The ECU 80 controls energization/deenergization (activation/deactivation) of the governor 26A via the wire E63, thereby switching the operation of the governor 26A. When energized, the governor 26A inputs an air-pressure signal to the drain valve 25 to open the drain valve 25. When de-energized, the governor 26A does not deliver an air-pressure signal to the drain valve 25, thereby exposing the drain valve 25 to the atmospheric pressure, thereby closing the drain valve 25.

The drain valve 25 is maintained in the closed position when receiving no air-pressure signal from the governor 26A. The drain valve 25 is switched to the open position when receiving an air-pressure signal from the governor 26A. Further, when the pressure at the input port of the drain valve 25, which is connected to the compressor 4, exceeds an upper limit, the drain valve 25 is forcibly switched to the open position.

An upstream check valve 15 is arranged between the compressor 4 and the filter 17 and between the compressor 4 and the branch passage 16. When the compressor 4 is disposed on the upstream side, and the filter 17 is disposed on the downstream side, the upstream check valve 15 permits air to flow only from the upstream side to the downstream side. The upstream check valve 15 has a specified valve opening pressure (sealing pressure). Thus, when compressed air flows, the pressure on the upstream side is higher than the pressure on the downstream side by the valve opening pressure. A reed valve at the outlet of the compressor 4 is provided on the upstream side of the upstream check valve 15. The branch passage 16 and the filter 17 are provided on the downstream side of the upstream check valve 15.

### Compressor 4

The compressor 4 is controlled by an unloading control valve 26B. The unloading control valve 26B is an electromagnetic valve controlled by the ECU 80. The ECU 80 controls energization/de-energization (activation/deactivation) of the unloading control valve 26B via the wire E62, thereby switching the operation of the unloading control valve 26B. When de-energized, the unloading control valve 26B switches to the open position and opens the passage between the unloading control valve 26B and the compressor 4 to the atmosphere. When energized, the unloading control valve 26B switches to a supply position and sends an air pressure signal, which is compressed air, to the compressor 4.

The state of the compressor 4 is switched to the non-operating state (idling operation) when the air pressure signal is input from the unloading control valve 26B. For example, when the pressure in the supply circuit 12 reaches a cut-out pressure, the supply of compressed dried air is unnecessary. When the pressure in the supply circuit 12 reaches the cut-out pressure and the ECU 80 energizes the unloading control valve 26B (activates the unloading control valve 26B), the unloading control valve 26B is switched to the supply position. This supplies the air pressure signal from the unloading control valve 26B to the compressor 4 and switches the compressor 4 to the non-operating state.

### Sensors

A pressure sensor 50 is arranged between the compressor 4 and the upstream check valve 15. The pressure sensor 50 is connected to the air supply passage 18, and measures the air pressure of the air supply passage 18 and sends the measurement result to the ECU 80 via the wire E61.

A humidity sensor 51 and a temperature sensor 52 are arranged between the downstream check valve 19 and the supply circuit 12. The humidity sensor 51 measures the humidity of the compressed dried air on the downstream side of the filter 17 and outputs the measurement result to the ECU 80 via the wire E65. The temperature sensor 52 measures the temperature of the compressed dried air on the downstream side of the filter 17 and outputs the measurement result to the ECU 80 via the wire E66. The ECU 80 determines the dryness state of the compressed dried air based on the humidity and the temperature of the compressed dried air input from the humidity sensor 51 and the temperature sensor 52. That is, the humidity and the temperature of the compressed dried air are indicators indicating the dryness state of the compressed dried air.

The ECU 80 executes a forced regeneration operation when the amount of compressed air that has passed through the filter 17 during the supplying operation (passed-through air amount) is greater than a specified passed-through air amount (first amount) and the humidity of the compressed dried air that is supplied is greater than a prescribed value. In the forced regeneration operation, the compressed dried air stored in the air tank 30 is caused to pass through the filter 17 in the inverse direction, as in the case of the normal regenerating operation, based on a determination condition different from the determination condition for the normal regenerating operation. Accordingly, the fluid trapped by the filter 17 is drained from the drain port 27.

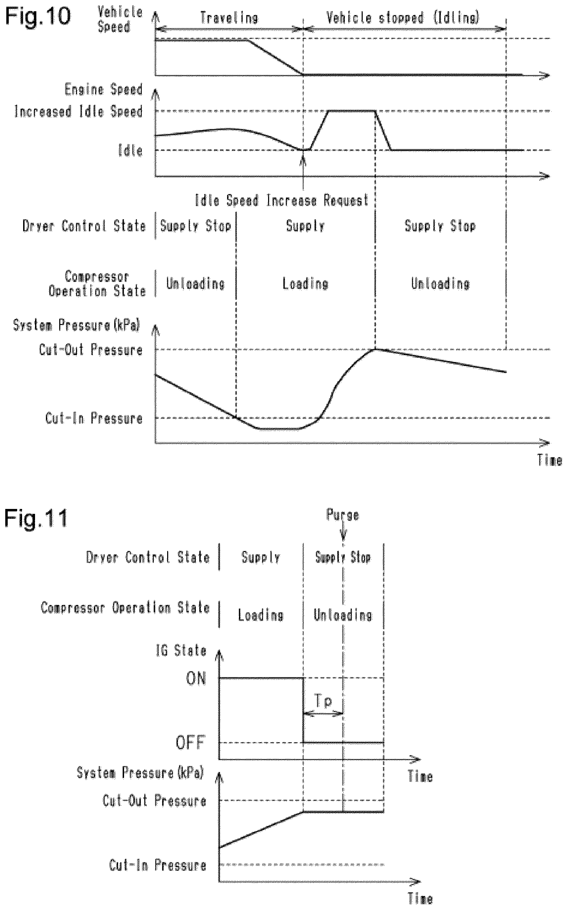

As shown in Fig. 10, the ECU 80 outputs to the engine an instruction for increasing the rotation speed of the engine when the amount of the compressed dried air stored in the air tank 30 is less than a specified amount (second amount). The specified amount is the amount of the compressed dried air stored in the air tank 30 when the pressure of the compressed dried air stored in the air tank 30, that is, the system pressure, which is the pressure of the air tank 30, is equal to the cut-in pressure. This process will be referred to as "idle speed increase request". Specifically, during the supplying operation, the ECU 80 performs an idle speed increase request when the amount of the compressed dried air stored in the air tank 30 is less than the specified amount and the vehicle is in a stopped state and with the engine idling.

As shown in Fig. 11, the ECU 80 performs a purging operation to discharge the compressed dried air in the air drying circuit 11 through the drain port 27 after a specified time Tp elapses from when the engine stops. This process will be referred to as a "key-off purge". The specified time Tp includes, for example, a time from the idle reduction to when the engine is started again or a time from when the engine is temporarily stopped for work to when the engine is started again. Thus, when starting the engine immediately after the engine is stopped, the purging is not performed.

The ECU 80 calculates a water content in supplied air based on the humidity and the temperature of compressed dried air when supplied to the air tank 30, and calculates a reference water content in the tank air based on the humidity and the temperature of the compressed dried air during regeneration, in which the compressed dried air is caused to flow back from the air tank 30. A water content in the tank air is obtained from Equation (1). The water content in supplied air is the amount of water delivered to the air tank 30 during the supplying operation, and can be calculated based on the humidity and the temperature during the supplying operation, and the amount of supplied air during a supplying cycle. The reference water content in the tank air is the amount of water present in the air tank 30 when the amount of water is updated, and can be calculated based on the humidity and the temperature or the water content in the tank air during regeneration. A water content in consumed air is the amount of water delivered from the air tank 30 through the consumption of the compressed dried air, and can be calculated based on the water content in the tank air and the amount of air consumed during a consumption cycle. (Water content in tank air) = (Reference water content in tank air) + (Change amount of water content in tank air) (Change amount of water content in tank air) = (Water content in supplied air) - (Water content in consumed air)

Further, a pressure sensor 53 is arranged between the downstream check valve 19 and the supply circuit 12. For example, the pressure sensor 53 is capable of detecting the air pressure in the air tank 30, which stores the compressed dried air, and is connected to the ECU 80 via the wire E67. The pressure between the downstream check valve 19 and the supply circuit 12 is the same as the pressure in the air tank 30, and the detection result of the pressure sensor 53 can be used as the pressure in the air tank 30. The pressure sensor 53 may be arranged in the supply circuit 12 or the air tank 30.

### Operation of Air Drying Circuit 11

As shown in Figs. 2A to 2F, the air drying circuit 11 includes operation modes including at least a first operation mode to an eighth operation mode.

### First Operation Mode

As shown in Fig. 2A, the first operation mode is a mode in which a supplying operation is performed. Specifically, a normal dehumidification (loading) is performed in the first operation mode. In the first operation mode, the regeneration control valve 21 and the unloading control valve 26B are closed (indicated by CLOSE in the drawing), and the governor 26A is shifted to an open position, at which the governor 26A does not input an air-pressure signal to the compressor 4 (indicated by CLOSE in the drawing). At this time, none of the regeneration control valve 21, the governor 26A, and the unloading control valve 26B is energized. Further, the governor 26A and the unloading control valve 26B expose, to the atmosphere, a port of the compressor 4 and a port of the drain valve 25 that are connected to the downstream sides of the governor 26A and the unloading control valve 26B. In the first operation mode, when compressed air is supplied from the compressor 4 (indicated by ON in the drawing), water and the like are removed by the filter 17 and the compressed air is supplied to the supply circuit 12. That is, the compressed air or the compressed dried air flows in a forward direction (first direction), which is the direction from the filter 17 toward the air tank 30.

### Second Operation Mode

As shown in Fig. 2B, the second operation mode is a mode in which a purging operation is performed to cause the compressed dried air in the air drying circuit 11 to pass through the filter 17 to purify the filter 17. In the second operation mode, the regeneration control valve 21 is closed, and the governor 26A and the unloading control valve 26B are open (indicated by OPEN in the drawing). At this time, the governor 26A and the unloading control valve 26B are energized, and the ports of the compressor 4 and the ports of the drain valve 25 that are connected to the downstream sides of the governor 26A and the unloading control valve 26B are respectively connected to the upstream sides (the side corresponding to the supply circuit 12). As a result, the compressor 4 is switched to the non-operating state (indicated by OFF in the drawing), and the drain valve 25 is opened. As a result, the compressed dried air between the downstream check valve 19 and the filter 17 flows (flows back) within the filter 17 in an inverse direction that is opposite to the forward direction, which is the flow direction of air in the first operation mode (supplying operation). That is, the compressed dried air flows in the inverse direction, which is a direction from the air tank 30 toward the filter 17 (second direction). The water and the like trapped by the filter 17 is drained as collected liquid through the drain port 27. The air pressure of the filter 17 and the air supply passage 18 are exposed to the atmospheric pressure.

### Third Operation Mode

As shown in Fig. 2C, the third operation mode is a mode in which a regeneration operation (normal regeneration operation) is performed to regenerate the filter 17. In the third operation mode, the regeneration control valve 21 and the unloading control valve 26B are open, and the governor 26A is located at an input position. At this time, the regeneration control valve 21 is energized, in addition to the governor 26A and the unloading control valve 26B. In the third operation mode, the compressor 4 is shifted to the non-operating state, and the compressed dried air stored in the supply circuit 12 or the air tank 30 is caused to flow back to the filter 17 and is discharged from the drain port 27. This removes water and the like trapped by the filter 17. The second operation mode and the third operation mode both purify the filter 17, but the third operation mode differs from the second operation mode at least in that the regeneration control valve 21 is opened. Thus, in the third operation mode, the compressed dried air in the air tank 30 is caused to pass through the filter 17 via the supply circuit 12 and the bypass passage 20. Therefore, the effect of purifying the filter 17 is higher than in the second operation mode. The air pressures in the filter 17 and the air supply passage 18 are exposed to the atmospheric pressure also in the third operation mode.

### Fourth Operation Mode

As shown in Fig. 2D, the fourth operation mode is a mode in which an oil-cut operation is performed to discharge the compressed air supplied from the compressor 4, while operating the compressor 4. When the compressor 4 is in the non-operating state, oil may collect in the compression chamber of the compressor 4. If the compressor 4 is switched to the operating state with oil collected in the compression chamber, the amount of oil contained in the compressed air delivered from the compression chamber may increase. The oil-cut operation is performed for discharging compressed air containing excessive oil via the drain valve 25 in order to reduce the load on the filter 17. In the fourth operation mode, the regeneration control valve 21 and the unloading control valve 26B are closed, and the governor 26A is closed after being opened for a certain period of time. In the fourth operation mode, when the compressor 4 is in the operating state, compressed air supplied from the compressor 4 is discharged from the drain port 27 for a certain period of time. This prevents the amount of water and oil trapped by the filter 17 from increasing immediately after the compressor 4 is switched from the non-operating state to the operating state. The oil-cut operation may be performed when oil from the compressor 4 in the operating state increases as the engine speed increases and when the load on the engine is relatively high.

### Fifth Operation Mode

As shown in Fig. 2E, the fifth operation mode is a mode in which a purgeless supply stop operation is performed to stop the compressor 4 without purging. In the fifth operation mode, the regeneration control valve 21 and the governor 26A are closed, and the unloading control valve 26B is opened. In the fifth operation mode, when the compressor 4 is in the non-operating state, the compressed air or the compressed dried air that remains in the air supply passage 18 or in the desiccant of the filter 17 is not discharged from the drain port 27, so that the air pressure is maintained.

### Sixth Operation Mode

As shown in Fig. 2F, the sixth operation mode is a mode in which a compressor assist operation is performed to execute a pressurization process. In the sixth operation mode, the regeneration control valve 21 and the unloading control valve 26B are opened, and the governor 26A is in the open position. In the sixth operation mode, when the compressor 4 is in the non-operating state, the compressed air in the supply circuit 12 is supplied (caused to flow backward) to the air supply passage 18 and the desiccant in the filter 17 to maintain the pressure in the air supply passage 18 and the filter 17 higher than the atmospheric pressure so that the back pressure (air pressure) of the upstream check valve 15 is maintained at a pressure higher than the atmospheric pressure. This limits the generation of negative pressure in the cylinder and reduces the operation load on the compressor 4 during the idling operation. Specifically, during the idling operation of the compressor 4, the drain valve 25 is closed so that compressed air supplied from the compressor 4 maintains the air pressure in the desiccant in the filter 17 and the air supply passage 18 higher than the atmospheric pressure.

### Seventh Operation Mode

As shown in Fig. 2A, the seventh operation mode is a mode in which a regenerative supplying operation is performed to execute dehumidification (loading) during a regenerative operation, in which the compressor 4 operates while the engine is in a no-load condition. In the seventh operation mode, the regeneration control valve 21, the governor 26A, and the unloading control valve 26B are closed (indicated by CLOSE in the drawing) in the same manner as the first operation mode.

### Eighth Operation Mode

As shown in Fig. 2C, the eighth operation mode is a mode in which forced regeneration operation is performed to forcibly regenerate the filter 17. In the eighth operation mode, the regeneration control valve 21, the governor 26A, and the unloading control valve 26B are opened in the same manner as the third operation mode, based on a determination condition different the determination condition for the normal regeneration condition in the third operation mode. The forced regeneration is executed when the desiccant is in a deteriorated state.

### Transitions of Operation Modes

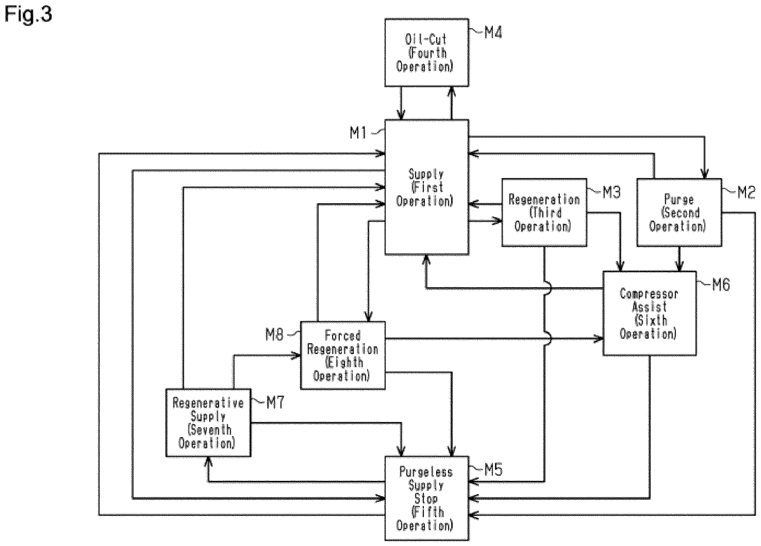

As shown in Fig. 3, the eight operation modes of the air drying circuit 11 are changed based on determinations made by the ECU 80.

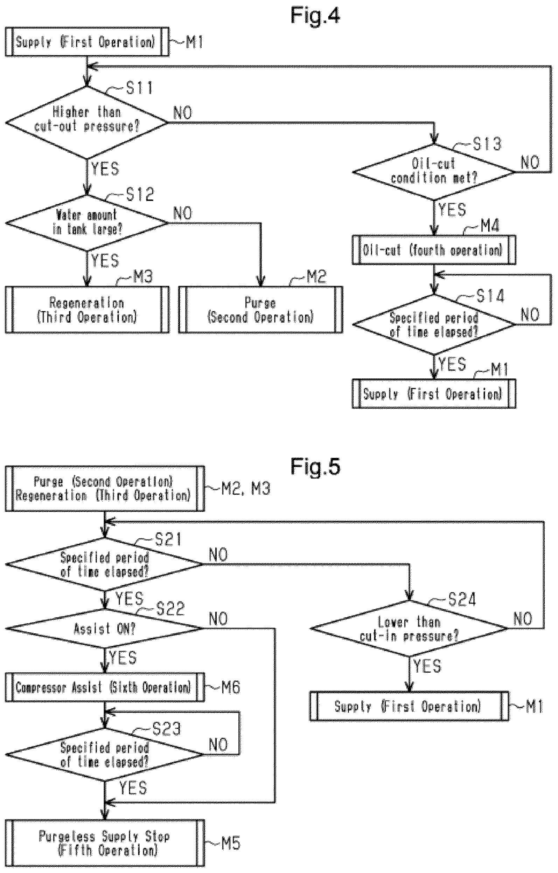

A transition from each operation mode will now be described with reference to Figs. 4 to 8.

The ECU 80 executes a supplying step that supplies compressed air, which is output by the compressor 4, to the supply circuit 12. The supplying step is started, for example, when the engine is started. In the supplying step, the air drying circuit 11 is in a supply (first operation) mode M1.

As shown in Fig. 4, in the supply (first operation) mode M1, the ECU 80 determines whether the pressure in the supply circuit 12 is higher than the cut-out pressure (step S11). Specifically, the ECU 80 obtains the pressure in the air tank 30 detected by the pressure sensor 53 and determines whether the pressure has reached the cut-out pressure.

When determining that the pressure in the supply circuit 12 has reached the cut-out pressure (step S11: YES), the ECU 80 determines whether the amount of water in the air tank 30 is relatively large (step S12). When the amount of water in the air tank 30 is greater than or equal to a specified value, the ECU 80 needs to regenerate the desiccant of the filter 17. Thus, the ECU 80 determines the amount of water in the air tank 30.

When determining that the amount of water in the air tank 30 is greater than or equal to the specified value (step S12: YES), the ECU 80 proceeds to the regeneration (third operation) mode M3. In the regeneration (third operation) mode M3, the ECU 80 causes the compressed dried air stored in the air tank 30 to pass through the filter 17 to regenerate the desiccant of the filter 17.

When determining that the amount of water in the air tank 30 is less than the specified value (step S12: NO), the ECU 80 proceeds to a purge (second operation) mode M2. In the purge (second operation) mode M2, the compressed dried air between the downstream check valve 19 and the filter 17 is caused to pass through the filter 17, so that water and the like trapped by the filter 17 are drained as collected liquid through the drain port 27.

When determining that the pressure in the supply circuit 12 has not reached the cut-out pressure (step S11: NO), the ECU 80 determines whether a condition for transitioning to an oil-cut (fourth operation) mode M4 is met (step S13). In other words, the ECU 80 determines whether all the following conditions for transitioning to the transition to the oil-cut (fourth operation) mode M4 are met: a certain period of time has elapsed, the number of times the oil-cut operation has been executed is less than a prescribed number of times, and the rate of operation of the compressor 4 is relatively low. When determining that the condition for transitioning to the oil-cut (fourth operation) mode M4 is not met (step S13: NO), the ECU 80 returns to step S11.

When determining that the condition for transitioning to the oil-cut (fourth operation) mode M4 is met (step S13: YES), the ECU 80 proceeds to the oil-cut (fourth operation) mode M4. In the oil-cut (fourth operation) mode M4, the ECU 80 discharges compressed air supplied from the compressor 4 while operating the compressor 4.

After transitioning to the oil-cut (fourth operation) mode M4, the ECU 80 determines whether a specified period of time has elapsed (step S14). In other words, the ECU 80 performs the oil-cut (fourth operation) mode M4 for the specified period of time. When determining that the specified period of time has elapsed (step S14: YES), the ECU 80 proceeds to the supply (first operation) mode M 1.

In the supply (first operation) mode M1, the ECU 80 may determine whether a condition for transitioning to a forced regeneration (eighth operation) mode M8 is met. When determining that the condition for transitioning to the forced regeneration (eighth operation) mode M8 is met, the ECU 80 may transition to the forced regeneration (eighth operation) mode M8. In the forced regeneration (eighth operation) mode M8, the filter 17 is forcibly regenerated.

As shown in Fig. 5, in the purge (second operation) mode M2 and the regeneration (third operation) mode M3, the ECU 80 determines whether a specified period of time has elapsed (step S21). In other words, the ECU 80 executes the purge (second operation) mode M2 and the regeneration (third operation) mode M3 for the specified period of time.

When determining that the specified period of time has not elapsed (step S21: NO), the ECU 80 determines whether the pressure in the supply circuit 12 is lower than a cut-in pressure (step S24). Specifically, the ECU 80 obtains the pressure in the air tank 30 detected by the pressure sensor 53 and determines whether the pressure has reached the cut-in pressure.

When determining that the pressure in the supply circuit 12 has reached the cut-in pressure (step S24: YES), the ECU 80 determines that the compressed dried air is insufficient and transitions to the supply (first operation) mode M1. When determining that the pressure in the supply circuit 12 has not reached the cut-in pressure (step S24: NO), the ECU 80 returns the process to step S21.

When determining that the specified period of time has elapsed (step S21: YES), the ECU 80 determines whether the compressor assist (sixth operation) process is enabled (step S22).

When determining that the compressor assist (sixth operation) process is disabled (step S22: NO), the ECU 80 proceeds to the purgeless supply stop mode (fifth operation) M5, in which the compressor 4 is stopped without purging. In the purgeless supply stop (fifth operation) mode M5, the ECU 80 stops the compressor 4 without purging.

When determining that the compressor assist (sixth operation) process is enabled (step S22: YES), the ECU 80 transitions to the compressor assist (sixth operation) mode M6, which performs the pressurization process.

After transitioning to the compressor assist (sixth operation) mode M6, the ECU 80 determines whether a specified period of time has elapsed (step S23). In other words, the ECU 80 executes the compressor assist (sixth operation) mode M6 for the specified period of time. When determining that the specified period of time has elapsed (step S23: YES), the ECU 80 transitions to the purgeless supply stop (fifth operation) mode M5.

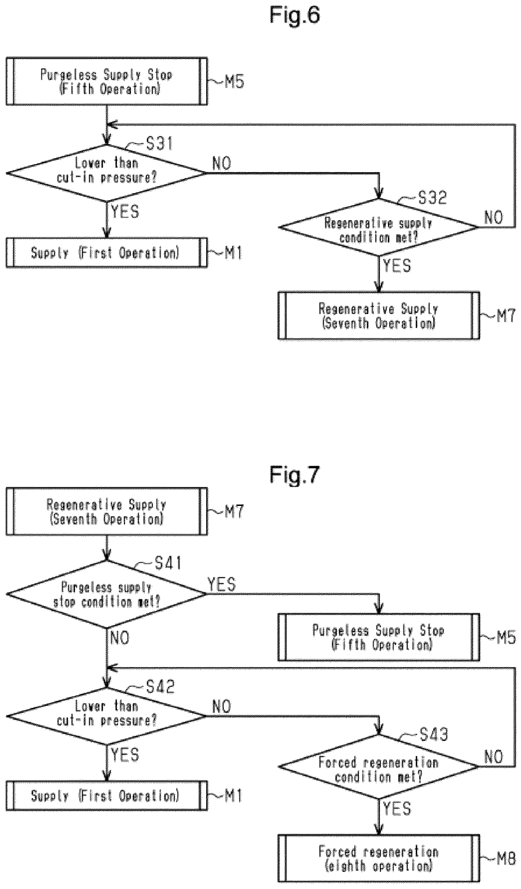

As shown in Fig. 6, in the purgeless supply stop (fifth operation) mode M5, the ECU 80 determines whether the pressure in the supply circuit 12 is lower than the cut-in pressure (step S31). Specifically, the ECU 80 obtains the pressure in the air tank 30 detected by the pressure sensor 53 and determines whether the pressure has reached the cut-in pressure.

When determining that the pressure in the supply circuit 12 has reached the cut-in pressure (step S31: YES), the ECU 80 determines that the compressed dried air is insufficient and transitions to the supply (first operation) mode M1.

When determining that the pressure in the supply circuit 12 has not reached the cut-in pressure (step S31: NO), the ECU 80 determines whether conditions for transitioning to a regenerative supply (seventh operation) mode M7 are met (step S32). In other words, the ECU 80 determines whether all the following conditions for transitioning to the regenerative supply (seventh operation) mode M7 are met: the vehicle is in motion, no fuel is being consumed, and the pressure in the supply circuit 12 is lower than a threshold. When determining that the conditions for transitioning to the regenerative supply (seventh operation) mode M7 are not met (step S32: NO), the ECU 80 returns to step S31.

When determining that the conditions for transitioning to the regenerative supply (seventh operation) mode M7 are met (step S32: YES), the ECU 80 proceeds to the regenerative supply (seventh operation) mode M7, which performs dehumidification (loading) during a regenerative operation.

As shown in Fig. 7, in the regenerative supply (seventh operation) mode M7, the ECU 80 determines whether a condition for transitioning to the purgeless supply stop (fifth operation) mode M5 is met (step S41). In other words, the ECU 80 determines whether at least one of the following conditions for transitioning to the purgeless supply stop (fifth operation) mode M5 is met: the pressure in the supply circuit 12 is higher than the cut-out pressure, a specified period of time has elapsed, and the engine has a relatively high fuel consumption. When determining that the condition for transitioning to the purgeless supply stop (fifth operation) mode M5 is met (step S41: YES), the ECU 80 transitions to the purgeless supply stop (fifth operation) mode M5.

When determining that the condition for transitioning to the purgeless supply stop (fifth operation) mode M5 is not met (step S41: NO), the ECU 80 determines whether the pressure in the supply circuit 12 is lower than the cut-in pressure (step S42). Specifically, the ECU 80 obtains the pressure in the air tank 30 detected by the pressure sensor 53 and determines whether the pressure has reached the cut-in pressure.

When determining that the pressure in the supply circuit 12 has reached the cut-in pressure (step S42: YES), the ECU 80 determines that the compressed dried air is insufficient and transitions to the supply (first operation) mode M1.

When determining that the pressure in the supply circuit 12 has not reached the cut-in pressure (step S42: NO), the ECU 80 determines whether the conditions for transitioning to the forced regeneration (eighth operation) mode M8 are met (step S43). In other words, the ECU 80 determines whether both of the following conditions for transitioning to the forced regeneration (eighth operation) mode M8 are met: the pressure in the supply circuit 12 is higher than the threshold, and the amount of water in the air tank 30 is relatively large. In the regenerative supply (seventh operation) mode M7, the ECU 80 determines the dryness state of the compressed dried air based on the water content in the tank air of the air tank 30. The water content in the tank air of the air tank 30 is an indicator indicating the dryness state of the compressed dried air. If the water content in the tank air is greater than or equal to a specified value, the ECU 80 determines that the amount of water in the air tank 30 is relatively large. If the water content in the tank air is less than the specified value, the ECU 80 determines that the amount of water in the air tank 30 is relatively small. When determining that the condition for transitioning to the forced regeneration (eighth operation) mode M8 is not met (step S43: NO), the ECU 80 returns to step S42.

On the other hand, when determining that the condition for transitioning to the forced regeneration (eighth operation) mode M8 is met (step S43: YES), the ECU 80 transitions to the forced regeneration (eighth operation) mode M8. In the forced regeneration (eighth operation) mode M8, the filter 17 is forcibly regenerated. When determining that the amount of water is relatively large and other conditions are met, the ECU 80 executes the forced regeneration (eighth operation) mode M8, in which compressed dried air flows in the inverse direction.

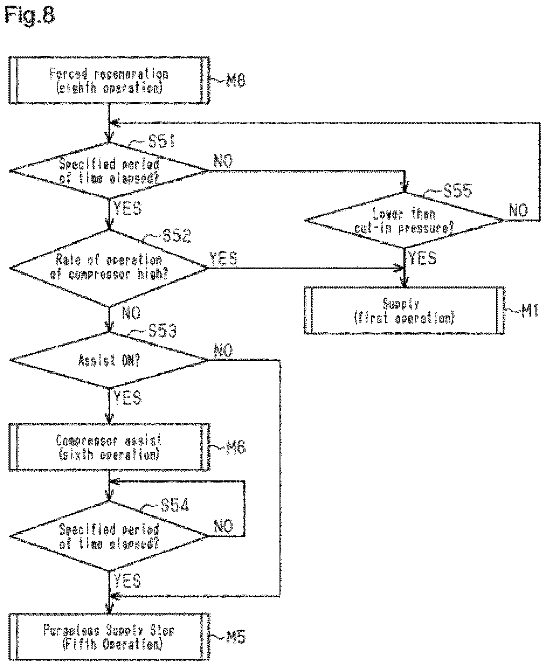

As shown in Fig. 8, in the forced regeneration (eighth operation) mode M8, the ECU 80 determines whether a specified period of time has elapsed (step S51). In other words, the ECU 80 executes the forced regeneration (eighth operation) mode M8 for the specified period of time.

When determining that the specified period of time has not elapsed (step S51: NO), the ECU 80 determines whether the pressure in the supply circuit 12 is lower than a cut-in pressure (step S55). Specifically, the ECU 80 obtains the pressure in the air tank 30 detected by the pressure sensor 53 and determines whether the pressure has reached the cut-in pressure.

When determining that the pressure in the supply circuit 12 has reached the cut-in pressure (step S55: YES), the ECU 80 determines that the compressed dried air is insufficient and transitions to the supply (first operation) mode M1. When determining that the pressure in the supply circuit 12 has not reached the cut-in pressure (step S55: NO), the ECU 80 returns the process to step S51.

When determining that the specified period of time has elapsed (step S51: YES), the ECU 80 determines whether the rate of operation of the compressor 4 is relatively high (step S52). Specifically, the ECU 80 determines whether the load on the compressor 4 during operation is relatively high based on the rate of operation of the compressor 4.

When determining that the rate of operation of the compressor 4 is relatively high (step S52: YES), the ECU 80 determines that the compressor assist (sixth operation) is not required, and transitions to the supply (first operation) mode M 1.

When determining that the rate of operation of the compressor 4 is relatively low (step S52: NO), the ECU 80 determines whether the compressor assist (sixth operation) process is enabled (step S53) to perform the compressor assist (sixth operation).

When determining that the compressor assist (sixth operation) process is disabled (step S53: NO), the ECU 80 transitions to a purgeless supply stop (fifth operation) mode M5. When determining that the compressor assist (sixth operation) process is enabled (step S53: YES), the ECU 80 transitions to the compressor assist (sixth operation) mode M6.

After transitioning to the compressor assist (sixth operation) mode M6, the ECU 80 determines whether a specified period of time has elapsed (step S54). In other words, the ECU 80 executes the compressor assist (sixth operation) mode M6 for the specified period of time. When determining that the specified period of time has elapsed (step S54: YES), the ECU 80 transitions to the purgeless supply stop (fifth operation) mode M5.

### Control during Forced Regeneration

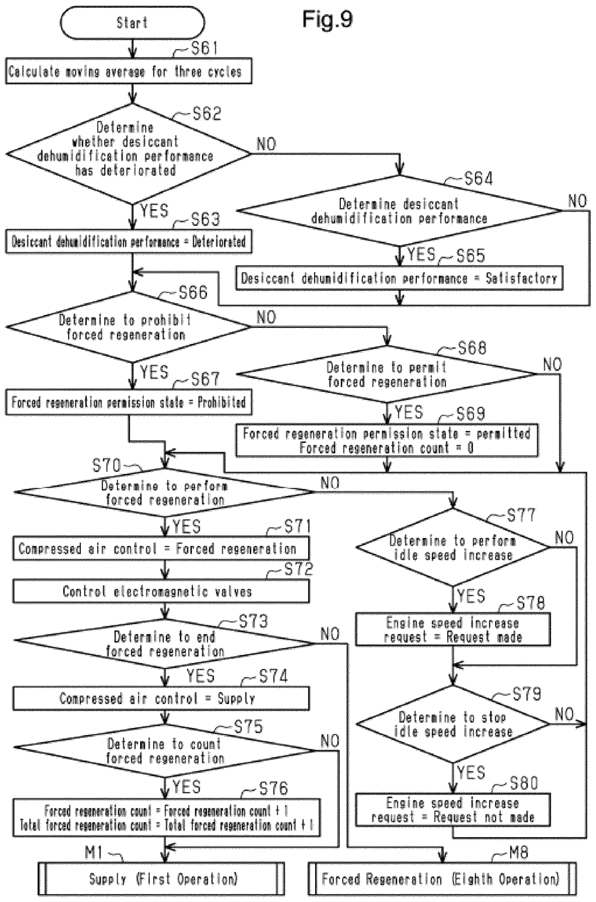

The control of the forced regeneration in the air supply system 10 will now be described with reference to Fig. 9. One cycle is defined as the period from the start of the loading operation by the compressor 4 to the end of the unloading operation.

First, as shown in Fig. 9, when proceeding to the forced regeneration (eighth operation) mode M8, the ECU 80 calculates the moving average for three cycles (step S61). That is, for the compressed dried air that has passed through the desiccant during the supplying operation, the ECU 80 calculates the moving average of the passed-through air amount for three cycles and the moving average of the maximum value of the humidity for three cycles (maximum humidity moving average).

Subsequently, the ECU 80 determines whether the desiccant dehumidification performance has deteriorated using the following determination expressions (step S62). In the present embodiment, this determination is made when "Moving average of passed-through air amount > Limit passed-through air amount x 2" and "Maximum humidity moving average > 60%" are satisfied. The values in the determination expressions can be changed arbitrarily. The limit passed-through air amount is a limit value of the passed-through air amount at which the performance of the desiccant can be maintained. When determining that the desiccant dehumidification performance has deteriorated (step S62: YES), the ECU 80 sets the desiccant dehumidification performance to be deteriorated (step S63). The ECU 80 then proceeds to step S66.

In contrast, when determining that the desiccant dehumidification performance has not deteriorated (step S62: NO), the ECU 80 determine whether the desiccant dehumidification performance is satisfactory (step S64) using the following determination expression. In the present embodiment, this determination is made when "Maximum humidity moving average ≤ 50 %" is satisfied. The values in the determination expressions can be changed arbitrarily. When determining that the desiccant dehumidification performance is not satisfactory (step S64: NO), the ECU 80 proceeds to step S66.

When determining that the desiccant dehumidification performance is satisfactory (step S64: YES), the ECU 80 sets the desiccant dehumidification performance to be satisfactory (step S65). The ECU 80 then proceeds to step S66.

Subsequently, the ECU 80 determines whether to prohibit the forced regeneration using the following determination expressions (step S66). In the present embodiment, this determination is made when "Maximum humidity moving average ≥ 80%" and "Forced regeneration count during desiccant performance deterioration ≥ 300" are satisfied, or when "Forced regeneration option = Disabled" is satisfied, or when "Forced regeneration user selection switch = Stopped" is satisfied. The values in the determination expressions can be changed arbitrarily. The forced regeneration count is defined as one execution of the forced regeneration when switched to another control after the execution of the forced regeneration. The forced regeneration option is an option for selecting whether to add the operation mode of the forced regeneration to the standard specification. When the forced regeneration option is enabled, the operation mode of the forced regeneration is added. The operation mode of forced regeneration may be included in the standard specification. The forced regeneration user selection switch allows the user to select whether the forced regeneration is necessary, taking into consideration a case in which the user does not wish to perform the forced regeneration. When determining to prohibit the forced regeneration (step S66: YES), the ECU 80 sets the forced regeneration permission state to "prohibited" (step S67).

When determining not to prohibit the forced regeneration (step S66: NO), the ECU 80 uses the following determination expressions to determine whether to permit the forced regeneration (step S68). In the present embodiment, this determination is made when "Forced regeneration option = Enabled" and "Forced regeneration user selection switch = Permitted" are satisfied, or when "Desiccant moisture absorption capability = Satisfactory" is satisfied. When determining not to permit the forced regeneration (step S68: NO), the ECU 80 proceeds to step S70.

When determining to permit the forced regeneration (step S68: YES), the ECU 80 sets the forced regeneration permission state to "permitted" and initializes the forced regeneration count (step S61). In the present embodiment, the initial value of the forced regeneration count is 0. The forced regeneration count starts being counted after the ignition is turned on. The ECU 80 then proceeds to step S70.

Subsequently, the ECU 80 determines whether to perform forced regeneration using the following determination expressions (step S70). In the present embodiment, this determination is made when "Compressed air control state = Supply", "Vehicle state = Traveling or stopped", "Outside air temperature < 3°C", "Desiccant dehumidification performance = Deteriorated", "Forced regeneration permission state = Permitted", "System pressure ≥ Forced regeneration execution system pressure threshold", and "Forced regeneration passed-through air amount ≥ 80L" are satisfied, or when "Forced regeneration execution time < 3 seconds" is satisfied. The compressed air control state refers to an operation mode. The forced regeneration execution system pressure threshold is a threshold used to determine whether the system pressure has a value required to execute the forced regeneration. The forced regeneration passed-through amount is the passed-through air amount during time elapsed from the start of supplying to the start of the forced regeneration. The values of the determination expressions can be changed arbitrarily. The determination expressions can also be selected arbitrarily.

When determining not to execute the forced regeneration (step S70: NO), the ECU 80 uses the following determination expressions to determine whether to perform the idle speed increase (step S77). In the present embodiment, this determination is made when "Engine speed increase request function option = Enabled", "Compressed air control state = Supply", "Vehicle state = Stopped", "Desiccant dehumidification performance = Deteriorated", "System pressure < Forced regeneration execution system pressure threshold", and "Selected gear = Neutral" are satisfied. The engine speed increase request function option is an option for selecting whether to add an engine speed increase request function to the standard specification. The engine speed increase request function is added by enabling the engine speed increase request function option. The engine speed increase request function may be included in the standard specification. The selected gear refers to the shift state of the transmission. The values in the determination expressions can be changed arbitrarily. The determination expressions can also be selected arbitrarily. When determining to perform the idle speed increase (step S77: YES), the ECU 80 determines that there is an engine speed increase request (step S78), and proceeds to step S79.

When determining not to perform the idle speed increase (step S77: NO), the ECU 80 proceeds to step S79.

Subsequently, the ECU 80 uses the following determination expressions to determine whether to end the idle speed increase (step S79). In the present embodiment, this determination is made when "Engine speed increase request function option = Disabled" is satisfied, when "Ignition = Off" is satisfied, when "Compressed air control state = Supply" is satisfied, when "Desiccant dehumidification performance = Satisfactory" is satisfied, when "System pressure ≥ Forced regeneration execution system pressure threshold" is satisfied, when "Selected gear = Neutral" is satisfied, when "Vehicle state = Traveling" is satisfied, or when "Engine = Stopped" is satisfied. The values in the determination expressions can be changed arbitrarily. At least two determination expressions can be selected arbitrarily. When determining not to end the idle speed increase (step S79: NO), the ECU 80 proceeds to step S70.

When determining to end the idle speed increase (step S79: YES), the ECU 80 determines that there is no engine speed increase request (step S80), and proceeds to step S70.

When determining to perform the forced regeneration (step S70: YES), the ECU 80 sets the compressed air control to "forced regeneration" (step S71), and controls the electromagnetic valves to perform the forced regeneration operation (step S72). In other words, the ECU 80 executes the forced regeneration (eighth operation) mode M8.

Subsequently, the ECU 80 determines whether to end the forced regeneration using the following determination expressions (step S73). In the present embodiment, this determination is made when "Compressed air control state = Forced regeneration" and "Forced regeneration execution time ≥ 3 seconds" are satisfied, when "Engine = Stopped" is satisfied, or when "System pressure < Forced regeneration ending system pressure" is satisfied. The values in the determination expressions can be changed arbitrarily. The determination expressions can also be selected arbitrarily. When determining not to end the forced regeneration (step S73: NO), the ECU 80 continues the forced regeneration (eighth operation) mode M8.

When determining to end the forced regeneration (step S73: YES), the ECU 80 sets the compressed air control to "supply" (step S74). In other words, the ECU 80 transitions to the supply (first operation) mode M1.

Subsequently, the ECU 80 determines whether to count the forced regeneration using the following determination expression (step S75). In the present embodiment, the determination expression is forced regeneration execution time ≥ 3 seconds. When determining not to count the forced regeneration (step S75: NO), the ECU 80 continues the supply (first operation) mode M1.

When determining to count the forced regeneration (step S75: YES), the ECU 80 adds 1 to the forced regeneration count and adds 1 to a total forced regeneration count (step S76). The total forced regeneration count is the total number of times the forced regeneration is performed from replacement of a filter including desiccant to the next replacement of the filter. The ECU 80 the continues to execute the supply (first operation) mode M1.

The key-off purge will now be described with reference to Fig. 11.

When the engine is stopped, the ECU 80 stops the supplying operation, which causes compressed air to pass through the filter 17. Accordingly, the remaining compressed air in the filter 17 is purged to the outside as shown in Fig. 11. This operation is referred to as a "key-off purge". If components in the compressed air left in the filter 17 are frozen, the compressed air cannot pass through the filter 17. Such freezing is prevented by purging. At this time, if the "key-off purge" is performed immediately after the engine is stopped, purging would be frequently performed in the case of the idle reduction or in the case of the operator stopping the engine each time the vehicle is moved. As a result, the compressed air in the filter 17 is unnecessarily discharged.

In the present embodiment, the ECU 80 does not perform the key-off purge immediately after th engine is stopped. Instead, the ECU 80 performs the purging after the specified time Tp has elapsed from when the engine is stopped. In the purging operation, the compressed air in the air supply passage 18 is discharged from the drain port 27. That is, the ECU 80 does not perform purging when the specified time Tp does not elapse. This reduces unnecessary consumption of compressed air. The specified time Tp is set longer than the time the engine is stopped during idle reduction or when the operator stops the engine each time the vehicle is moved, and shorter than the time it takes for the air supply passage 18 to freeze. The key-off purge is most appropriate when the conditions requiring the forced regeneration are met at the time the engine is stopped.

The present embodiment has the following advantages.
(1) The forced regeneration operation is executed when the amount of compressed air that has passed through the filter 17 is greater than the specified passed-through air amount and the humidity of the compressed dried air that is supplied is greater than the prescribed value. Thus, even if the regeneration operation is not performed and the supplying operation is continuously performed, the compressed dried air stored in the air tank 30 is caused to pass through the filter 17 in the inverse direction, so that the filter 17 is regenerated. This limits an increase in the humidity of the compressed dried air that is supplied.
(2) An instruction for increasing the rotation speed of the engine is output to the engine when the amount of the compressed dried air stored in the air tank 30 is less than a specified amount. This increases the supply amount of the compressed dried air.
(3) The purging operation is performed after the specified time Tp elapses from when the engine stops. Thus, when starting the engine immediately after the engine is stopped, the purging operation is not performed. This reduces the discharge of the compressed dried air due to the key-off purge, in which the engine is stopped and the purging operation is performed, so that the supplying operation is limited. Accordingly, the fuel economy is improved.
(4) The ECU 80 controls the drain valve 25 and the regeneration control valve 21 to perform the supply (first operation mode), the regeneration (third operation mode), and the forced regeneration (eighth operation mode).

### Other Embodiments

The above-described embodiments may be modified as follows. The above-described embodiment and the following modifications can be combined as long as the combined modifications remain technically consistent with each other.

In the above-described embodiment, the air supply system 10 is configured to perform the key-off purge, in which the purging operation is performed after the engine is stopped, and the idle speed increase request, which outputs an instruction for increasing the engine speed. However, the air supply system 10 may be configured to perform only one of the key-off purge and the idle speed increase request.

In the above-described embodiment, the purge (second operation) mode M2, the regeneration (third operation) mode M3, the oil-cut (fourth operation) mode M4, the compressor assist (sixth operation) mode M6, the regenerative supply (seventh operation) mode M7, and the forced regeneration (eighth operation) mode M8 are each performed for the specified time. However, the specified time for each mode may be set arbitrarily.

In step S13 of the above-described embodiment, the condition for transitioning to the oil-cut (fourth operation) mode M4 is met when the number of times of performance of the oil-cut operation is less than a specified number of times and the rate of operation of the compressor 4 is relatively low. Instead, when at least one of the conditions is met, the ECU 80 may transition to the oil-cut (fourth operation) mode M4. In other words, in step S13, the ECU 80 determines whether at least one of the following conditions for transitioning to the oil-cut (fourth operation) mode M4 is met: a certain period of time has elapsed, the number of times the oil-cut operation has been executed is less than a prescribed number of times, and the rate of operation of the compressor 4 is relatively low.

In step S32 of the above-described embodiment, it is determined whether all the following conditions for transitioning to the regenerative supply (seventh operation) mode M7 are met: the vehicle is in motion, no fuel is being consumed, and the pressure in the supply circuit 12 is lower than a threshold. Instead, when at least one of the conditions is met, the ECU 80 may transition to the regenerative supply (seventh operation) mode M7. In other words, in step S32, the ECU 80 determines whether at least one of the following conditions for transitioning to the regenerative supply (seventh operation) mode M7 is met: the vehicle is in motion, no fuel is being consumed, and the pressure in the supply circuit 12 is lower than a threshold.

In step S43 of the above-described embodiment, it is determined whether both of the following conditions for transitioning to the forced regeneration (eighth operation) mode M8 are met: the pressure in the supply circuit 12 is higher than the threshold, and the amount of water in the air tank 30 is relatively large. Instead, the ECU 80 may transition to the forced regeneration (eighth operation) mode M8 when at least the amount of water in the air tank 30 is relatively large. In other words, in step S43, the ECU 80 determines whether the amount of water in the air tank 30 is relatively large as the condition for the transition to the forced regeneration (eighth operation) mode M8.

In the above-described embodiment, the filter 17 includes the oil trapping portion, but the oil trapping portion may be omitted from the filter 17.
In the above-described embodiment, an engine is used as a drive source of the compressor 4. However, an electric motor or the like may be used as a drive source of the compressor 4. In this case, an idle speed increase request is output to the electric motor.

In the above-described embodiment, the air drying circuit does not have the above-described configuration. The air drying circuit may have any configuration as long as the air drying circuit is configured to perform the supply (first operation) mode M1, the regenerative supply (seventh operation) mode M7, the regeneration (third operation) mode M3, and the forced regeneration (eighth operation) mode M8. Accordingly, the air drying circuit does not necessarily need to perform the purge (second operation) mode M2, the oil-cut (fourth operation) mode M4, the purgeless supply stop (fifth operation) mode M5, and the compressor assist (sixth operation) mode M6.

In the above-described embodiment, the air supply system 10 is described as a system employed in a vehicle such as a truck, a bus, or a construction machine. Alternatively, the air supply system may be mounted on other vehicles such as passenger cars, railway vehicles, or the like.

In the above-described embodiments, multiple objects can be integrated into a single object, or conversely, a single object can be divided into multiple objects. Regardless of whether the objects are integrated or divided, the configuration should be such that the objective of the invention can be achieved.

In the above-described embodiments, multiple functions that are distributed can be aggregated in part or in whole, or conversely, multiple functions that are aggregated can be distributed in part or in whole. Regardless of whether the functions are aggregated or distributed, the configuration should be such that the objective of the invention can be achieved.

### REFERENCE SIGNS LIST

4) Compressor
10) Air Supply System
11) Air Drying Circuit
12) Supply Circuit
15) Upstream Check Valve
16) Branch Passage
17) Filter
18) Air Supply Passage
19) Downstream Check Valve
20) Bypass Passage
21) Regeneration Control Valve
22) Orifice
25) Drain Valve
26A) Governor
26B) Unloading Control Valve
27) Drain Port as Discharge Port
30) Air Tank
50) Pressure Sensor
51) Humidity Sensor
52) Temperature Sensor
53) Pressure Sensor
80) ECU
80A) Storage Unit
E61 to E67) Wirings

## Claims

1. An air supply system, comprising:
an air drying circuit arranged between a compressor configured to use power of an engine as a drive source to deliver compressed air and an air tank configured to store compressed dried air, the air drying circuit including a filter including a desiccant that captures water; and
a controller configured to control the air drying circuit, wherein
the controller is configured to execute
a supplying operation of causing the compressed air delivered by the compressor to pass through the filter in a first direction to produce compressed dried air, and storing this compressed dried air in the air tank;
a normal regeneration operation of causing the compressed dried air stored in the air tank to pass through the filter in a second direction that is opposite to the first direction, thereby draining the trapped water through a discharge port; and
a forced regeneration operation of causing, when an amount of the compressed air that has passed through the filter in the supplying operation is greater than a first amount and a humidity of the compressed dried air that is supplied is greater than a prescribed value, the compressed dried air stored in the air tank to pass through the filter in the second direction, thereby draining the trapped water through the discharge port.

2. The air supply system according to claim 1, wherein the controller is configured to output to the engine an instruction for increasing a rotation speed of the engine when an amount of the compressed dried air stored in the air tank is less than a second amount.

3. The air supply system according to claim 1 or 2, wherein the controller is configured to perform a purging operation to discharge the compressed dried air in the air drying circuit from the discharge port after a specified time elapses from when the engine stops.

4. The air supply system according to any one of claims 1 to 3, further comprising:
a branch passage connected to the air drying circuit;
a drain valve that connects the branch passage to the discharge port; and
a regeneration control valve capable of switching a direction in which the compressed dried air flows between the first direction and the second direction, wherein
the first direction is a direction from the filter toward the air tank, and the second direction is a direction from the air tank toward the filter, and
the controller is configured to control the drain valve and the regeneration control valve.

5. A control method for an air supply system, wherein
the air supply system includes:
an air drying circuit arranged between a compressor configured to use power of an engine as a drive source to deliver compressed air and an air tank configured to store compressed dried air, the air drying circuit including a filter including a desiccant that captures water; and
a controller configured to control the air drying circuit, wherein
the method comprises:
a supplying step that executes a supplying operation of causing the compressed air delivered by the compressor to pass through the filter in a first direction to produce compressed dried air, and storing this compressed dried air in the air tank;
a regenerating step that executes a normal regeneration operation of causing the compressed dried air stored in the air tank to pass through the filter in a second direction that is opposite to the first direction, thereby draining the trapped water through a discharge port; and
a forced regeneration step that executes a forced regeneration operation of causing the compressed dried air stored in the air tank to pass through the filter in the second direction, thereby draining the trapped water through the discharge port when an amount of the compressed air that has passed through the filter in the supplying operation is greater than a first amount and a humidity of the compressed dried air that is supplied is greater than a prescribed value.

6. A control program for an air supply system, the air supply system including:
an air drying circuit arranged between a compressor configured to use power of an engine as a drive source to deliver compressed air and an air tank configured to store compressed dried air, the air drying circuit including a filter including a desiccant that captures water; and
a controller configured to control the air drying circuit, wherein
the controller executes
a supplying step that executes a supplying operation of causing the compressed air delivered by the compressor to pass through the filter in a first direction to produce compressed dried air, and storing this compressed dried air in the air tank;
a regenerating step that executes a normal regeneration operation of causing the compressed dried air stored in the air tank to pass through the filter in a second direction that is opposite to the first direction, thereby draining the trapped water through a discharge port; and
a forced regeneration step that executes a forced regeneration operation of causing the compressed dried air stored in the air tank to pass through the filter in the second direction, thereby draining the trapped water through the discharge port when an amount of the compressed air that has passed through the filter in the supplying operation is greater than a first amount and a humidity of the compressed dried air that is supplied is greater than a prescribed value.
